# EUROPEAN PATENT SPECIFICATION

(11) **EP 3 467 430 B1**
(45) Date of publication and mention of the grant of the patent: **15.02.2023**
(21) Application number: 17195095.9
(22) Date of filing: 06.10.2017
(51) Int. Cl.: G01B 11/25

(54) **METHOD AND SYSTEM FOR OPTICALLY SCANNING AND MEASURING OBJECTS**
VERFAHREN UND SYSTEM ZUR OPTISCHEN ABTASTUNG UND VERMESSUNG VON OBJEKTEN
PROCÉDÉ ET SYSTÈME POUR BALAYER ET MESURER OPTIQUEMENT DES OBJETS

(43) Date of publication of application: 10.04.2019
(73) Proprietor: Bayerische Motoren Werke Aktiengesellschaft, 80809 München (DE)
(72) Inventor: Rhoads, Scott, Seneca SC 29672 (US); Rohling, Charlie, Greer SC 29651 (US)

(56) References cited:
- WO-A1-2008/108749
- GB-A- 2 218 513
- US-A1- 2012 263 347
- US-A1- 2015 248 755

## Description

The invention relates to a method and a system for optically scanning and measuring objects.

Coordinate measuring machines (CMM) have been a major technology in the field of metrology and for the measurement of the physical geometrical characteristics of objects. CMM significantly reduce errors compared to those conducted by personnel using a measuring device, henceforth CMM are used vastly on industrial scale. Different kinds of CMM are used according to the degree of accuracy required and the type of object being measured. In the case of big bodies or structures, one of the most commonly used CMM is a horizontal arm CMM. However, in this case the whole process is immensely time consuming, since it involves steps like, bringing of the part to a CMM room, calibrating measuring probes of the CMM, mounting fixtures and measuring a part of the object concerned. This process comprising of the aforementioned steps requires more than six hours per part. Further, after the measurement of a body side, the side needs to be changed to the other side and the aforementioned steps need to be repeated. Hence, the whole process of measuring the object using the horizontal CMM is very time consuming and initial investment costs are high. Moreover, in order to operate the whole measuring equipment, a skilled operator is required.

One of the other commonly used CMM is a laser radar or a laser scanning device, which is a form of non-contact measuring means suitable for objects that are either more complex, require high-precision or are easily deformable. In this case, either a part of the object or the laser scanning device needs to be moved in order to achieve a line of sight for the laser beam of light. The laser scanning device is usually heavy and requires an automated measurement solution such as a robot or robot arm, in order to carry the laser scanning device to a required region of measurement of the object. This robot or robot arm requires significant safety devices, such as a caged cell with lockout or other lasers, in order to prevent accidents during the operation of the robot, in case a person intrudes in an area of operation of the robot while it is operating. This prevents the operator from working in the area of operation, loading parts etc., which in turn occupies a large space only for the operation of the robot or the robot arm and prevents any other operation that could be performed at tandem and therefore reduces the manufacturing rate.

In US 2012/0262700 A1 a device for optically scanning and measuring an environment is described. The device is a laser scanner having a light emitter which, by a rotary mirror, emits an emission light beam, and having a light receiver which receives a reception light beam, which, after passing the rotary mirror and a receiver lens which has an optical axis, is reflected from an object in the environment of the laser scanner. The laser scanner also includes a control and evaluation unit which determines the distance to the object for a multitude of measuring points. Also, a rear mirror is provided on the optical axis behind the receiver lens, where the rear mirror reflects towards the receiver lens the reception light beam which is refracted by the receiver lens.

US 2015/0075018 A1 describes an articulated arm coordinate measurement machine (AACMM) that includes a noncontact 3D measurement device, position transducers, a camera, and a processor operable to project a spot of light to an object point, to measure first 3D coordinates of the object point based on readings of the noncontact 3D measurement device and the position transducers, to capture the spot of light with the camera in a camera image, and to attribute the first 3D coordinates to the spot of light in the camera image.

In GB 2 218 513 A an apparatus for the three-dimensional assessment of an object (one) comprises a laser distance-measuring device, means for mounting the object within range of said device, means for rotating the object and for moving the device linearly relative to the object and a computer for processing distance measurements to give the desired assessment of the object. The three-dimensional assessment of an object comprising rotating the object relative to a laser distance-measuring device, taking measurements of the positions of points on the surface of the object relative to other, pre-determined positions, feeding said measurements to a computer and processing them to give the desired assessment of the object. The device is used to determine the precise volume of bread loaves.

In US 2012/263347 a three-dimensional scanner includes an irradiation unit, an imaging unit, a position detecting unit, and a scanning-region determining unit. The irradiation unit emits a slit-shaped light beam while changing an irradiation position with respect to a measuring object. The imaging unit sequentially captures images of the measuring object irradiated with the light beam. The position detecting unit detects a position of the light beam in an image captured by the imaging unit by scanning the image. The scanning-region determining unit determines a scanning region in an image as a scanning target by the position detecting unit based on a position of the light beam in an image captured by the imaging unit before the image as a scanning target.

WO 2008/108 749 A1 discloses a system having a scanner capable of capturing three dimensional measurement data about a target surface having a housing retaining an image sensing array and a light source is disclosed. The scanner is capable of capturing an area of the target surface spanning at least two square inches in a single capture field. The scanner has a bounding box circumscribing a projected footprint of the housing on a work surface during operation of the scanner having an area of no more than sixty-five square inches. The system further includes a positioner capable of actively reorienting an object. The scanner and positioner may have an aggregate footprint during operation of no more than ninety five square inches.

It is an object of the present invention to provide a method and a system for optically scanning and measuring objects for improving the efficiency of the measuring process of the objects as well as improving the safety during the measuring process.

This object is solved by a method having the features of patent claim 1 as well as by a system having the features of patent claim 3. Advantageous embodiments with expedient developments of the invention are indicated in the dependent claims.

According to the present invention, the presented method for optically scanning and measuring at least two geometrically identical objects by means of a laser scanning device, comprises at least the following steps: Emitting at least a beam of light on each of the at least two geometrically identical objects sequentially by means of the laser scanning device. Moving the laser scanning device between at least two points along a fixed structure and/or moving at least the beam of light emitted by the laser scanning device relative to the fixed structure.

The moving of the laser scanning device on a fixed structure is of advantage, since the added rigidity that comes from keeping the structure fixed or immobile reduces measuring uncertainty as compared to a robot arm, where the motion takes place in all three orthogonal directions, namely X-, Y- and Z-directions, this in turn increases the degree of uncertainty in the measurements.

It is of further advantage, if the laser scanning device is moved along the fixed structure in vertical direction. This is of advantage, since this makes it less susceptible to deformation due to the weight of the laser scanning device as compared to the case in which the laser scanning device is movable a horizontal fixed structure.

A further advantage of moving the laser scanning device along the fixed structure is that, it does not need a cage which is a necessity while using a robot arm due to safety reasons. The avoidance of the cage increases space for operators to perform other tasks in parallel in the region near the laser scanning device while the laser scanning device is performing the measuring task. This in turn helps in the better use of space as well as being able to perform other tasks in parallel, this could be helpful to accelerate the manufacturing process. The avoidance of cage along with other concerned high safety equipment in the case of a robot arm, leads to an effective reduction in cost.

In another step of the method the at least two geometrically identical objects are moved, wherein the at least two geometrically identical objects are mounted in different spatial orientations relative to the fixed structure, wherein the at least two geometrically identical objects are moved at the same time or in a succession.

In another step of the method, the laser scanning device measures the position coordinates on the at least two geometrically identical objects by means of the laser scanning device by receiving a reflected beam of the at least one emitted beam of light, which is the at least partially reflected beam of light from each of the at least two geometrically identical objects.

Hence this method eliminates the need of a robot arm to carry the laser scanning machine, which leads to low costs. Furthermore, due to the absence of the robot arm, no cage is required. This improves the safe work conditions for the operators and at the same time is cost effective. Further the optically scanning each of the at least two geometrically identical objects in different spatial orientations by the laser scanning machine leads to a fast inspection and/or measurement process of the whole object. In other words, for example if the object comprises of three bodysides, then three geometrically identical objects are placed in three different orientations, such that each enable the scanning and measuring of their respective bodyside. The three geometrically identical objects are moved, for example in a rotary motion about their respective axis, which can be parallel to a vertical axis, whereas the laser scanning device moves along the fixed structure in vertical direction. Hence the scanning of the respective moving objects by means of the laser scanning device sequentially enables the measurement of the points on each of the geometrically identical objects sequentially. As a result the measurement of the whole object, which comprises of the three bodysides, is completed in a very short duration of time. Furthermore, the operation of the laser scanning device can be done by any trained production associate or operator and no extra skills are needed.

In an advantageous embodiment of the invention the moving of the at least two geometrically identical objects is conducted in the form of rotary motion about their respective axis relative to the fixed structure. The rotary motion of the objects can be in the X-Y plane, that is, the objects rotate about their axis which is along Z-direction or vertical direction or parallel to vertical axis or parallel to Z axis . In this manner the rotary motion of the objects in the X-Y plane provides the X and Y coordinates of the points on the objects to the laser scanning device, wherein the laser scanning device moves along the fixed structure along Z-direction or vertical direction. This in turn enables the measurement of the respective Z coordinates of the points on the object. Henceforth, the whole set of respective X, Y and Z coordinates of the points on the at least two geometrical identical objects can be measured by the laser scanning device.

For example if an object comprises two sides, namely an inner side and an outer side, firstly the object can be placed in an orientation where the inner side of the object can be measured, then the laser scanning device can measure the inner side of the object. Once the scanning of the inner side is completed, then the laser scanning device can turn towards a second object, which is another geometrically identical object but placed in a different orientation, such that now the measurement of the outer side of the object is possible. In the meantime the first measured object can be replaced by another object in a similar orientation. This enables loading while measuring, which in turn leads to a fast inspection and/or measurement process. Once the measurement of the current second object in the second orientation is completed, the laser scanning device turns back to the first position where a new object in the first orientation is already located ready to being measured. In the meantime the second body can be replaced by the first but in the second orientation. Hence, in this manner, the method of the present invention enables the scanning and measuring of the whole object in a short duration of time. Furthermore, this method enables more inspections and/or measurements in less time because of loading of new objects while measuring, which in turn is cost effective at the same time.

In a further advantageous embodiment of the invention, three geometrically identical objects are measured by means of the laser scanning device. This is of advantage, since it enables the scanning and measurement of objects with three different bodysides, such as a car body comprising three bodysides, namely inner bodyside, middle bodyside and outer bodyside. For measuring the inner bodyside, the car body can be opened such that the inner bodyside is exposed for the optical scanning and measurement by the laser scanning device. As result, this leads to a very fast, cost effective and efficient measuring process.

Another aspect of the invention relates to a system for optically scanning and measuring at least two geometrically identical objects. The system comprises a laser scanning device by means of which a beam of light is emittable, means for moving the laser scanning device between at least two points along a fixed structure and/or moving at least the beam of light emitted by the laser scanning device relative to the fixed structure, means for moving the at least two geometrically identical objects, wherein the at least two geometrically identical objects are mountable upon the means for moving the at least two geometrically identical objects in different spatial orientations relative to the fixed structure, wherein the at least two geometrically identical objects are moveable at the same time or in succession. Furthermore, the system comprises means for measuring position coordinates of points on the at least two geometrically identical objects by means of the laser scanning device by receiving a reflected beam of the emitted beam of light, which is the at least partially reflected beam of light from each of the at least two geometrically identical objects. This is of advantage, since it enables the optical scanning and measurement of the objects as whole in a very short duration of time compared to the traditional measurement methods with CMM. Further, the operation of the laser scanning device is simpler compared to other CMM and can be done by a trained production associate and it does not required extra skills.

In an advantageous embodiment/configuration of the invention, the laser scanning device is designed to emit a beam of light on each of the at least two geometrically identical objects sequentially or simultaneously. This is of advantage, since it enables the measurement of the whole object comprising of at least two different bodysides to be scanned and measured sequentially or simultaneously, as a result the whole measurement process requires very less time and the measurement process is less expensive compared to the traditional CMM equipment.

It is of further advantage, if the laser scanning device is configured to protect passing people by stopping the measuring process as soon as operators step into a predefined measurement or inspection area around the laser scanning device. This is of advantage, since it ensures the safety of the operators during the measurement process.

In a further advantageous embodiment of the invention, the means for moving the at least two geometrically identical objects are designed as turntables. These turntables are capable of supporting large bodies or structures such as car bodies or engines in automobile industry or big structures related to the aerospace industry.

In a further advantageous embodiment of the invention, each of the turntables comprise respective fixtures which are designed to hold the objects in their respective spatial orientations. This enables the new loading of the other turntables during the measuring process, which in turn leads to a fast measuring process.

In a further advantageous embodiment of the invention, the system comprises three means for moving three geometrically identical objects, wherein the means are arranged in a semicircle around the laser scanning device. This is of advantage, since it enables the optical scanning and measurement of the objects with three bodysides in a very short duration of time and the arrangement in the form of a semicircle ensures the occupation of least possible space of the measurement area and also in this manner, the three objects are at equal distance from the laser scanning device, which can make the final calibration of the whole object simpler, faster and accurate.

The proposed method and system according to the invention, allows optically scanning and measuring at least two geometrically identical objects by means of a laser scanning device, which eliminates the need of a robot to carry the laser scanning device. The elimination of a robot is not only cost effective but it improves the safe working conditions and a cage is no more required, which in turn provides more space for the operators to perform other tasks near the laser scanning device and hence improve the manufacturing rate and process. Since, a new loading while measuring is enabled, this improves the inspection and/or measurement rate, which in turn is cost effective and enables more inspections and/or measurements in less time. The measurement time can take less than 30 minutes which makes a big difference compared to a conventional horizontal arm CMM, which can in turn need up to 6 hours or more for a single measurement. Further the different steps of the method as well as the operation of the system mentioned in the present invention can be done by any trained production associate and it does not required extra skills. Furthermore, the user gets an immediate report with the measurement information back after the measurements are completed. This solution can be used in the manufacturing process as well as in the metrology room.

Advantageous embodiments of the method according to the present invention are to be regarded as advantageous embodiments of the system according to the present invention and vice versa.

Further advantages, features, and details of the present invention derive from the following description of a preferred embodiment as well as from the drawings. The invention is defined in appended independent claims 1 and 3.

The drawings show in:
- Fig. 1: a flow diagram illustrating steps of a method for optically scanning and measuring at least two geometrically identical objects, by means of which method, the at least two geometrically identical objects can be optically scanned and measured by means of a laser scanning device; and
- Fig. 2: a schematic and perspective view of an embodiment of the system for optically scanning and measuring at least two geometrically identical objects.

In the figures the same elements or elements having the same functions are indicated by the same reference signs.

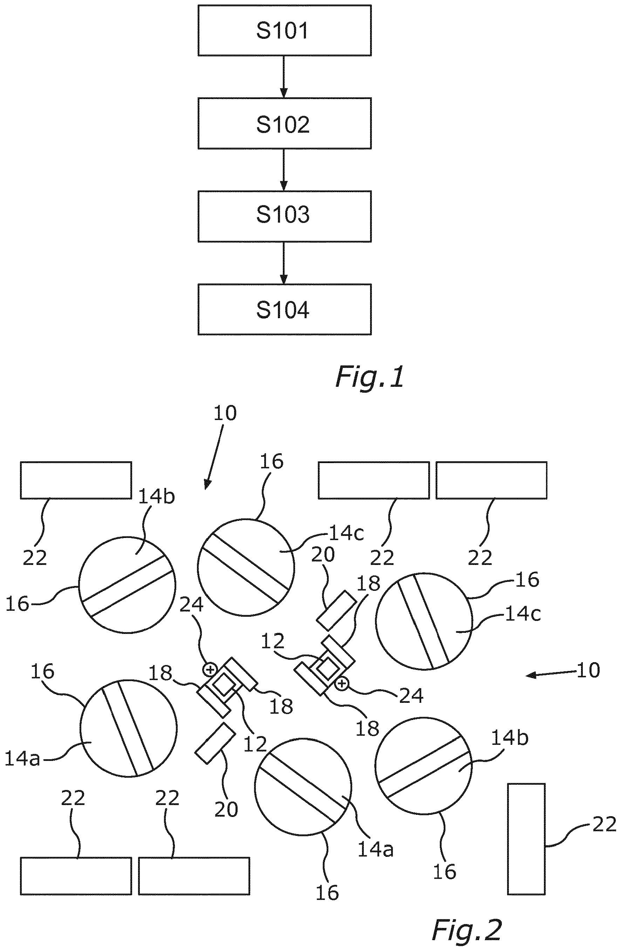

Fig. 1 shows a flow diagram illustrating a method for optically scanning and measuring at least two geometrically identical objects 14 by means of a laser scanning device 12 according to the present invention.

The laser scanning device 12 offers good accuracy and excellent precision as well as freedom of movement, but it also requires a tracker to have a clear and direct line of sight to a scanner. A first step S101 of the method for optically scanning and measuring at least two geometrically identical objects 14 by means of a laser scanning device 12 involves emitting at least a beam of light on one of the at least two geometrically identical objects 14 by means of the laser scanning device 12. The laser scanning device 12 is designed to emit the beam of light sequentially or at the same time on each of the at least two geometrically identical objects 14.The emitted light beam may be a laser beam in an appropriate range of wave length. Further, other electromagnetic waves having other wavelengths can also be considered. The emitted light beam is emitted by a light emitter of the laser scanning device 12. The emitted light beam can be amplitude modulated in various possible waveform modulation signals.

In a second step S102, the laser scanning device 12 is moved between at least two fixed points along a fixed structure 24, during which the laser scanning device 12 can emit the beam of light on the concerned object 14. The fixed structure 24 can be in the form of a vertical tower, or a straight or a curved structure in a specified direction. The motion of the beam of the laser scanning device 12 along a fixed structure 24 reduces its degree of freedom of its movement, which in turn leads to less errors. Further, it can be possible that the light beam emitted by the laser scanning device 12 is moved along the concerned object 14 relative to the fixed structure 24, while the laser scanning device 12 is fixed onto the fixed structure 24. The movement of the emitted light beam can be realized by moving a mirror, which receives the light beam from a light emitter in the laser scanning device 12 and reflects the light beam towards the concerned object 14. A further option, can be possible in which both the laser scanning device 12 as well as the emitted beam of light by the laser scanning device 12 are moved in a synchronized manner, in order to optimize the scanning process. The moving of the laser scanning device 12 between two points along a fixed structure 24 and/or the moving of the light beam emitted by the laser scanning device 12 can be realized by means of a mechanical or an electronic system. The moving of the laser scanning device 12 and/or the light beam emitted by the laser scanning device 12 can be one direction, for example in vertical direction or Z-direction.

A third step S103 of the method involves, moving each of the at least two geometrically identical objects 14, wherein each of the at least two geometrically identical objects 14 are mounted in different spatial orientations relative to the fixed structure 24. Each of the at least two geometrically identical objects 14 are moved at the same time or in succession. Each of the at least two geometrically identical objects 14 can be placed or fixed in different spatial orientations on at least two corresponding mechanical surfaces, such as turntables 16 (shown in Fig. 2), which are capable of supporting the weight of the corresponding objects 14, which can be in the form of large objects 14, such as motor vehicles, with higher weights.

Each of the at least two geometrically identical objects 14 can be moved by moving the mechanical surfaces, such as turntables 16, by means of a mechanical or electrical system. The motion of the objects 14 can be in form of a rotary motion, so that for example, if the rotary motion is about the Z-axis, in this case the objects 14 rotate in an X-Y plane, wherein the motion of the laser scanning device 12 and/or the beam of light emitted by the laser scanning device 12 on each of the at least two geometrically identical rotating object 14 is in the Z-direction. This enables the laser scanning device 12 in a fourth step S104 of the method, to measure the position coordinates of points on each of the at least two geometrically identical objects 14 by receiving a reflected beam of the emitted beam of light, which is the at least partially reflected beam of light from each of the at least two geometrically identical objects 14.

Once the scanning and measuring of the coordinate points on one of the at least two at geometrically identical objects 14 by the laser scanning device 12 is completed, then the laser scanning device 12 can turn towards the other of the at least two geometrically identical objects 14, which is in a different orientation compared to the former. The laser scanning device 12 can then scan the other of the at least two geometrically identical rotating objects 14, while moving in the Z-direction and measuring the coordinates of the points on its surface.

Fig. 2 shows a schematic and perspective view of an embodiment of the system 10 for optically scanning and measuring at least two geometrically identical objects 14. In Fig. 2 a system 10 comprises of two sets of laser scanning devices 12, wherein each of the laser scanning device 12 is surrounded by three geometrically identical objects 14, which are each placed on turntables 16. In the further explanation of the Fig. 2, only one set will be discussed, the other set is analogous to the discussed set, that is, the set comprising of one laser scanning device 12 and three geometrically identical objects 14, each of which are placed on turntables 16. The three geometrically identical objects 14 in their respective spatial orientations, in this case, the orientations are inner bodyside, middle bodyside and outer bodyside of the concerned geometrically identical objects 14. For the sake of understandability, the three geometrically identical objects 14 will be termed according to their orientations as follows: inner bodyside 14a, middle bodyside 14b and outer bodyside 14c. The turntables 16 are positioned in a semicircle around the laser scanning device 12.

The turntables 16 move in a rotary motion about a respective axis which is parallel to the vertical axis or Z-axis, that is, the three geometrically identical objects 14, which are placed or fixed on the turntables 16 move in a rotary motion about their respective axis which is parallel to the vertical axis or Z-axis. In other words, the three geometrically identical objects 14 move in an X-Y plane. Whereas the laser scanning device 12 is moved along a vertical fixed structure 24 in a Z-direction between two fixed points. The motion of the laser scanning device 12 is controlled by means of electronic controllers 18.

The laser scanning device 12 emits a beam of light on the first geometrically identical object 14a which is oriented in a first spatial orientation such that the inner bodyside of the object 14a can be scanned and measured. The rotary motion of the object 14a by means of the turntable 16 about its axis which is parallel to the vertical axis or the Z-direction, that is, in the X-Y plane provides access to X and Y coordinates of the points on the surface of the object 14a. Since the laser scanning device itself is moved along the vertical fixed structure 24 in a Z-direction between two fixed points, this in turn enables the access to the Z coordinates of the points on the surface of the object 14a. As a result the complete set of coordinates X, Y and Z of each of the points on the surface of the object 14a can be measured by the laser scanning device 12 which receives a reflected beam of the emitted beam of light, which is at least a partially reflected beam of light by the first of the three geometrically identical objects 14a. The information with the measured coordinates of the points on the surface of the object 14a can be provided to the operator immediately, this information can be processed by a computer 20 to analyze the data and this data can be in the form of a digital file format used in a computer aided design (CAD) software.

Once the first of the three geometrically identical objects 14a is scanned and measured, the laser scanning device 12 is turned towards the second of the three geometrically identical objects 14b which is oriented in a second spatial orientation such that the middle bodyside of the object 14b can be scanned and measured. Similar to the first object 14a, the second object 14b is also moved in a rotary motion about its axis which is parallel to the vertical axis or the Z-direction, that is, in the X-Y plane, whereas the laser scanning device 12 is moved along the vertical fixed structure 24 in the Z-direction. And in a similar manner to the first object 14a, the X, Y and Z coordinates of the second object 14b are measured by the laser scanning device 12 and the information of the measured points is sent to the operator for further processing by the computer 20.

After the measurement of the second of the three geometrically similar objects 14b, the laser scanning device 12 is turned to the third of the three geometrically similar objects 14c which is oriented in a third spatial orientation such that the outer bodyside of the object 14c can be scanned and measured. Finally, the third object 14c is measured in a similar manner to that of 14a and 14b. In this manner, the measurement of the whole object 14, that is, the all the three body sides can be optically scanned and measured by the laser scanning device 12. As a result, the complete scanning and measurement of the object 14 can be achieved.

Further, each of the turntables 16 comprise respective fixtures which are designed to hold the geometrically identical objects 14 in the respective spatial orientations, that is, the orientations namely inner bodyside, middle bodyside and outer bodyside of the concerned geometrically identical objects 14. This enables the new loading of the other tables during the measuring process. And the whole process of the measurements of the earlier mentioned objects 14a, 14b and 14c is repeated. The new loading can be transported easily from a nearby storage room 22.

Once the Laser scanning device 12 has scanned and measured all the three geometrically identical objects 14, in other words the the three geometrically identical objects 14a, 14b and 14c, the whole process may be repeated with a set of different objects, which may therefore be mounted on the respective turntables 16.

## Claims

1. Method for optically scanning and measuring at least two geometrically identical objects (14) by means of a laser scanning device (12), the method comprising:
- emitting at least a beam of light on each of the at least two geometrically identical objects (14) sequentially or at the same time by means of the laser scanning device (12);
- moving the laser scanning device (12) between at least two points along a fixed structure (24), during which the laser scanning device (12) emits the beam of light on the concerned object (14), and/or moving at least the beam of light emitted by the laser scanning device (12) relative to the fixed structure (24);
- moving each of the at least two geometrically identical objects (14), wherein each of the at least two geometrically identical objects (14) are mounted in different spatial orientations, relative to the fixed structure (24), wherein each of the at least two geometrically identical objects (14) are moved at the same time or in succession, wherein the motion of the objects (14) are in form of a rotary motion, and the rotary motion is about a Z-axis, wherein the objects (14) rotate in a X-Y plane, wherein the motion of the laser scanning device (12) and/or the beam of the light emitted by the laser scanning device (12) on each of the at least two geometrically identical rotating object (14) is in a Z-direction, and wherein each of the at least two geometrically identical objects (14) are placed or fixed in different spatial orientations on at least two corresponding turntables (16);
- measuring position coordinates of points on each of the at least two geometrically identical objects (14) by means of the laser scanning device (12) by receiving a reflected beam of the at least one emitted beam of light, which is the at least partially reflected beam of light from each of the at least two geometrically identical objects (12);
- processing the information from the measured coordinates of the points and analyzing this data, such that a complete scanning and measurement of a whole object (14) is achieved.

2. Method according to claim 1,
**characterized in that**,
three geometrically identical objects (14) are measured by means of the laser scanning device (12).

3. System (10) for optically scanning and measuring at least two geometrically identical objects (14), the system (10) comprising:
- a laser scanning device (12) by means of which a beam of light is emittable;
- means for moving the laser scanning device (12) between at least two points along a fixed structure (24), while the laser scanning device (12) emits the beam of light on the concerned object (14), and/or moving at least a beam of light emitted by the at least one laser scanning device (12) relative to the fixed structure (24);
- means for moving each of the at least two geometrically identical objects (14), wherein the means for moving comprise at least two corresponding turntables (16), wherein each of the at least two geometrically identical objects (14) are mountable upon the means for moving the at least two geometrically identical objects (14) in different spatial orientations relative to the fixed structure (24), wherein the at least two geometrically identical objects (14) are moveable at the same time or in succession, wherein the motion of the objects (14) are in form of a rotary motion, and the rotary motion is about a Z-axis, wherein the objects (14) rotate in a X-Y plane, wherein the motion of the laser scanning device (12) and/or the beam of the light emitted by the laser scanning device (12) on each of the at least two geometrically identical rotating object (14) is in a Z-direction, and wherein each of the at least two geometrically identical objects (14) are placed or fixed in different spatial orientations on the at least two corresponding turntables (16);
- means for measuring position coordinates of points on the at least two geometrically identical objects (14) by means of the laser scanning device (12) by receiving a reflected beam of the emitted beam of light, which is the at least partially reflected beam of light from each of the at least two geometrically identical objects (14);
- a computer (20), the computer (20) configured to process the information from the measured coordinates of the points and to analyze this data, such that a complete scanning and measurement of a whole object (14) is achieved.

4. System (10) according to claim 3,
**characterized in that**,
the laser scanning device (12) is designed to emit the beam of light on each of the at least two geometrically identical objects (14) sequentially.

5. System (10) according to claim 3 or 4,
**characterized in that**,
the turntables (16) each comprise respective fixtures which are designed to hold the objects (14) in the respective spatial orientations.

6. System (10) according to any one of the claims from 3 to 5,
**characterized in that**,
the system (10) comprises three means for moving three geometrically identical objects (14), wherein the means are arranged in a semicircle around the at least one laser scanning device (12).

## Patentansprüche

1. Verfahren zum optischen Scannen und Vermessen mindestens zweier geometrisch identischer Objekte (14) mittels einer Laserscanvorrichtung (12), wobei das Verfahren Folgendes umfasst:
- Emittieren mindestens eines Lichtstrahls auf jedes der mindestens zwei geometrisch identischen Objekte (14) nacheinander oder gleichzeitig mittels der Laserscanvorrichtung (12),
- Bewegen der Laserscanvorrichtung (12) zwischen mindestens zwei Punkten entlang einer feststehenden Struktur (24), während die Laserscanvorrichtung (12) den Lichtstrahl auf das betreffende Objekt (14) emittiert, und/oder Bewegen mindestens des Lichtstrahls, der von der Laserscanvorrichtung (12) emittiert wird, relativ zu der feststehenden Struktur (24),
- Bewegen jedes der mindestens zwei geometrisch identischen Objekte (14), wobei jedes der mindestens zwei geometrisch identischen Objekte (14) in einer anderen räumlichen Ausrichtung relativ zu der feststehenden Struktur (24) montiert ist, wobei jedes der mindestens zwei geometrisch identischen Objekte (14) zur gleichen Zeit oder in Folge bewegt wird, wobei die Bewegung der Objekte (14) in Form einer Drehbewegung erfolgt und die Drehbewegung um eine Z-Achse erfolgt, wobei sich die Objekte (14) in einer X-Y-Ebene drehen, wobei die Bewegung der Laserscanvorrichtung (12) und/oder des Lichtstrahls, der von der Laserscanvorrichtung (12) auf jedes der mindestens zwei geometrisch identischen, sich drehenden Objekte (14) emittiert wird, in einer Z-Richtung erfolgt und wobei jedes der mindestens zwei geometrisch identischen Objekte (14) in einer anderen räumlichen Ausrichtung auf mindestens zwei entsprechenden Drehtischen (16) platziert oder befestigt ist,
- Messen von Positionskoordinaten von Punkten auf jedem der mindestens zwei geometrisch identischen Objekte (14) mittels der Laserscanvorrichtung (12) durch Empfangen eines reflektierten Strahls des mindestens einen emittierten Lichtstrahls, welcher der zumindest teilweise reflektierte Lichtstrahl von jedem der mindestens zwei geometrisch identischen Objekte (12) ist,
- Verarbeiten der Informationen aus den gemessenen Koordinaten der Punkte und Analysieren dieser Daten derart, dass ein vollständiges Scannen und Vermessen eines gesamten Objekts (14) erreicht wird.

2. Verfahren nach Anspruch 1,
**dadurch gekennzeichnet, dass**
drei geometrisch identische Objekte (14) mittels der Laserscanvorrichtung (12) vermessen werden.

3. System (10) zum optischen Scannen und Vermessen mindestens zweier geometrisch identischer Objekte (14), wobei das System Folgendes umfasst:
- eine Laserscanvorrichtung (12), mittels derer ein Lichtstrahl emittierbar ist,
- Mittel zum Bewegen der Laserscanvorrichtung (12) zwischen mindestens zwei Punkten entlang einer feststehenden Struktur (24), während die Laserscanvorrichtung (12) den Lichtstrahl auf das betreffende Objekt (14) emittiert, und/oder zum Bewegen mindestens eines Lichtstrahls, der von der Laserscanvorrichtung (12) emittiert wird, relativ zu der feststehenden Struktur (24),
- Mittel zum Bewegen jedes der mindestens zwei geometrisch identischen Objekte (14), wobei die Mittel zum Bewegen mindestens zwei entsprechende Drehtische (16) umfassen, wobei jedes der mindestens zwei geometrisch identischen Objekte (14) in einer anderen räumlichen Ausrichtung relativ zu der feststehenden Struktur (24) auf die Mittel zum Bewegen der mindestens zwei geometrisch identischen Objekte (14) montierbar ist, wobei die mindestens zwei geometrisch identischen Objekte (14) zur gleichen Zeit oder in Folge bewegbar sind, wobei die Bewegung der Objekte (14) in Form einer Drehbewegung erfolgt und die Drehbewegung um eine Z-Achse erfolgt, wobei sich die Objekte (14) in einer X-Y-Ebene drehen, wobei die Bewegung der Laserscanvorrichtung (12) und/oder des Lichtstrahls, der von der Laserscanvorrichtung (12) auf jeden der mindestens zwei geometrisch identischen sich drehenden Objekte (14) emittiert wird, in einer Z-Richtung erfolgt und wobei jedes der mindestens zwei geometrisch identischen Objekte (14) in einer anderen räumlichen Ausrichtung auf den mindestens zwei entsprechenden Drehtischen (16) platziert oder befestigt ist,
- Mittel zum Messen von Positionskoordinaten von Punkten auf den mindestens zwei geometrisch identischen Objekten (14) mittels der Laserscanvorrichtung (12) durch Empfangen eines reflektierten Strahls des emittierten Lichtstrahls, welcher der zumindest teilweise reflektierte Lichtstrahl von jedem der mindestens zwei geometrisch identischen Objekte (14) ist,
- einen Computer (20), wobei der Computer (20) dafür konfiguriert ist, die Informationen aus den gemessenen Koordinaten der Punkte zu verarbeiten und diese Daten derart zu analysieren, dass ein vollständiges Scannen und Vermessen eines gesamten Objekts (14) erreicht wird.

4. System (10) nach Anspruch 3,
**dadurch gekennzeichnet, dass**
die Laserscanvorrichtung (12) dafür gestaltet ist, den Lichtstrahl nacheinander auf jedes der mindestens zwei geometrisch identischen Objekte (14) zu emittieren.

5. System nach Anspruch 3 oder 4,
**dadurch gekennzeichnet, dass**
die Drehtische (16) jeweils entsprechende Befestigungen umfassen, die dafür gestaltet sind, die Objekte (14) in der jeweiligen räumlichen Ausrichtung zu halten.

6. System nach einem der Ansprüche 3 bis 5,
**dadurch gekennzeichnet, dass**
das System (10) drei Mittel zum Bewegen dreier geometrisch identischer Objekte (14) umfasst, wobei die Mittel in einem Halbkreis um die mindestens eine Laserscanvorrichtung (12) angeordnet sind.

## Revendications

1. Procédé pour balayer optiquement et mesurer au moins deux objets géométriquement identiques (14) au moyen d'un dispositif de balayage laser (12), ce procédé comprenant :
- l'émission d'au moins un faisceau de lumière sur chacun des au moins deux objets géométriquement identiques (14) séquentiellement ou en même temps au moyen du dispositif de balayage laser (12) ;
- le déplacement du dispositif de balayage laser (12) entre au moins deux points le long d'une structure fixe (24), pendant lequel de dispositif de balayage laser (12) émet le faisceau de lumière sur l'objet concerné (14), et/ou le déplacement d'au moins le faisceau de lumière émis par le dispositif de balayage laser (12) par rapport à la structure fixe (24) ;
- le déplacement de chacun des au moins deux objets géométriquement identiques (14), chacun de ces au moins deux objets géométriquement identiques (14) étant monté dans des orientations spatiales différentes, par rapport à la structure fixe (24), chacun des au moins deux objets géométriquement identiques (14) étant déplacés en même temps ou séquentiellement, le déplacement des objets (14) étant sous la forme d'un mouvement rotatif, et le mouvement rotatif étant autour d'un axe Z, les objets (14) tournant dans un plan X-Y, le déplacement du dispositif de balayage laser (12) et/ou du faisceau de la lumière émise par le dispositif de balayage laser (12) sur chacun des au moins deux objets géométriquement identiques (14) étant dans une direction Z, et chacun des au moins deux objets géométriquement identiques (14) étant placé ou fixé dans des orientations spatiales différentes sur au moins deux tables tournantes correspondantes (16) ;
- la mesure de coordonnées de position de points sur chacun des au moins deux objets géométriquement identiques (14) au moyen du dispositif de balayage laser (12) en recevant un faisceau réfléchi de l'au moins un faisceau de lumière émis, qui est le faisceau de lumière réfléchi au moins partiellement venant de chacun des au moins deux objets géométriquement identiques (12) ;
- le traitement des informations à partir des coordonnées mesurées des points et l'analyse de ces données, de manière à ce qu'un balayage complet et une mesure complète de tout l'objet (14) soient exécutés.

2. Procédé selon la revendication 1,
**caractérisé en ce que**
trois objets géométriquement identiques (14) sont mesurés au moyen du dispositif de balayage laser (12).

3. Système (10) pour balayer optiquement et mesurer au moins deux objets géométriquement identiques (14), ce système comprenant :
- un dispositif de balayage laser (12) au moyen duquel un faisceau de lumière peut être émis ;
- un moyen pour déplacer le dispositif de balayage laser (12) entre au moins deux points le long d'une structure fixe (24), tandis que de dispositif de balayage laser (12) émet le faisceau de lumière sur l'objet concerné (14), et/ou pour déplacer au moins un faisceau de lumière émis par l'au moins un dispositif de balayage laser (12) par rapport à la structure fixe (24) ;
un moyen pour déplacer chacun des au moins deux objets géométriquement identiques (14), ce moyen de déplacement comprenant au moins deux tables tournantes correspondantes (16), chacun des au moins deux objets géométriquement identiques (14) pouvant être monté sur le moyen de déplacement des au moins deux objets géométriquement identiques (14) dans des orientations spatiales différentes par rapport à la structure fixe (24), les au moins deux objets géométriquement identiques (14) pouvant être déplacés en même temps ou séquentiellement, le déplacement des objets (14) étant sous la forme d'un mouvement rotatif, et le mouvement rotatif étant autour d'un axe Z, les objets (14) tournant dans un plan X-Y, le déplacement du dispositif de balayage laser (12) et/ou du faisceau de la lumière émise par le dispositif de balayage laser (12) sur chacun des au moins deux objets géométriquement identiques (14) étant dans une direction Z, et chacun des au moins deux objets géométriquement identiques (14) étant placés ou fixés dans des orientations spatiales différentes sur les au moins deux tables tournantes correspondantes (16) ;
- un moyen pour mesurer des coordonnées de position de points sur les au moins deux objets géométriquement identiques (14) au moyen du dispositif de balayage laser (12) en recevant un faisceau réfléchi du faisceau de lumière émis, qui est le faisceau de lumière réfléchi au moins partiellement venant de chacun des au moins deux objets géométriquement identiques (14) ;
- un ordinateur (20), cet ordinateur (20) étant configuré de façon à traiter les informations à partir des coordonnées mesurées des points et à analyser ces données, de manière à ce qu'un balayage complet et une mesure complète de tout l'objet (14) soient exécutés.

4. Système (10) selon la revendication 3,
**caractérisé en ce que**
le dispositif de balayage laser (12) est conçu de façon à émettre le faisceau de lumière sur chacun des au moins deux objets géométriquement identiques (14) séquentiellement.

5. Système (10) selon la revendication 3 ou 4,
**caractérisé en ce que**
les tables tournantes (16) comportent chacune des moyens de maintien respectifs qui sont conçus de façon à maintenir les objets (14) dans les orientations spatiales respectives.

6. Système (10) selon l'une quelconque des revendications 3 à 5,
**caractérisé en ce que**
ce système (10) comporte trois moyens pour déplacer trois objets géométriquement identiques (14), ces moyens étant disposés en demi-cercle autour de l'au moins un dispositif de balayage laser (12).
